# NEUE EUROPÄISCHE PATENTSCHRIFT

(11) **EP 0 995 931 B2**
(45) Veröffentlichungstag und Bekanntmachung des Hinweises auf die Entscheidung über den Einspruch: **26.08.2009**
(45) Hinweis auf die Patenterteilung: 11.02.2004
(21) Anmeldenummer: 99117443.4
(22) Anmeldetag: 08.09.1999
(51) Int. Cl.: F16H 61/24, F16H 59/02

(54) **Wählvorrichtung zur manuellen Beeinflussung einer Fahrstufe eines automatisierten Getriebes und Steuerung zum Vermitteln eines Schaltgefühls am Wählhebel**
Selecting device for manually shifting an automatic transmission and control system for providing feel on the control lever
Dispositif de sélection pour le changement manuel de vitesse d'une transmission automatique et système de contrôle pour donner une sensation à la commande

(30) Priorität: 20.10.1998 DE 19848210
(43) Veröffentlichungstag der Anmeldung: 26.04.2000
(73) Patentinhaber: Volkswagen Aktiengesellschaft, 38436 Wolfsburg (DE)
(72) Erfinder: Cappelmann, Bernd, Dipl.-Ing., 38176 Wendeburg-Neubrück (DE); Wilken, Martin, Dipl.-Ing., 38114 Braunschweig (DE); Fähland, Jörg, Dipl.-Ing., 38524 Sassenburg (DE); Damm, Ansgar, Dr., 38518 Gifhorn (DE)

(56) Entgegenhaltungen:
- DE-A- 4 428 205
- DE-A- 19 610 766
- DE-A- 19 743 375
- DE-A1- 3 007 953
- DE-C- 19 733 206
- PATENT ABSTRACTS OF JAPAN vol. 017, no. 490 (M-1474), 6. September 1993 (1993-09-06) -& JP 05 118414 A (TOYOTA MOTOR CORP), 14. Mai 1993 (1993-05-14)
- PATENT ABSTRACTS OF JAPAN vol. 1996, no. 03, 29. März 1996 (1996-03-29) -& JP 07 301311 A (SAKAE RIKEN KOGYO KK), 14. November 1995 (1995-11-14)
- PATENT ABSTRACTS OF JAPAN vol. 1997, no. 03, 31. März 1997 (1997-03-31) -& JP 08 296735 A (FUJI KIKO CO LTD), 12. November 1996 (1996-11-12)

## Beschreibung

Die Erfindung geht aus von einer Wählvorrichtung zur manuellen Beeinflussung einer Fahrstufe eines automatisierten Getriebes, insbesondere für Kraftfahrzeuge, mit einem Wählhebel, dessen Bewegung einem das automatisierte Getriebe beeinflussenden Steuergerät signalisiert wird.

Bei automatisierten Getrieben wird teilweise eine Funktion integriert, mit der ein Fahrer selbständig durch Bewegung eines Wählhebels nach vorn oder hinten Gänge des Getriebes sequentiell verändern kann. Dafür wird neben einer Gasse mit den üblichen Schaltstellungen (R, N, P, D, usw.) eine weitere Gasse angelegt. Eine Schaltbewegung in dieser Gasse wird zumeist über Schalter, Potentiometer etc. gemessen und von einem Getriebesteuergerät als Wunsch des Fahrers zum Gangwechsel interpretiert. Eine feste mechanische Verbindung zwischen dem Wählhebel und dem Getriebe besteht nicht. Es ist wünschenswert dem Fahrer dennoch das Gefühl zu geben, daß er direkt durch das Betätigen des Wählhebels den Gang wechseln könne.

Aus der DE 44 28 205 A1 ist eine Betätigungseinrichtung zum Steuern des Gangwechsels eines Getriebes für ein Kraftfahrzeug bekannt. Das Getriebe ist räumlich getrennt von der Betätigungseinrichtung. Um die durch eine Elastizität von langen Schaltzügen oder Schaltstangen mangelnde haptische Rückmeldung zu verbessern, ist eine auf einen Schalthebel wirkende Widerstandseinrichtung zur Beeinflussung der Betätigungskraft vorgesehen.

Die DE 197 43 375 A1 zeigt eine Schaltvorrichtung für ein handbetätigtes Automatikgetriebe. Ein Schalthebel wird von einer einzigen Federeinrichtung gehalten, so daß eine wegproportionale Schaltkraft gegeben ist. Weiterhin ist eine Widerstandskraft mittels einer Vertiefung vorgesehen, wodurch einem Fahrer ein positives Gefühl einer handbetätigten Gangschaltung vermittelt werden soll.

Aus der DE 196 10 766 A1 ist eine Wähl- und Schalteinrichtung für ein Gangwechselgetriebe bekannt. Durch Neigungsflächen, die an einem Handschalthebel einwirken, soll der Kraftverlauf bei einem manuellen Schalten über einem Schaltweg variabel erfolgen.

Aus der DE 30 07 953 A1 ist eine Schalteinrichtung für ein fremdkraftbetätigtes Getriebe bekannt, bei dem der Gangwählhebel bei jedem Schaltvorgang in einer ausgelenkten Stellung gesperrt wird. Sobald sich der Wählhebel in dieser gesperrten Stellung befindet, wird der Schaltvorgang initiiert und durchgeführt. Nach Abschluss des Schaltvorgangs wird die Sperre aufgehoben und der Wählhebel kann bis zu seinem Endanschlag durchgezogen werden. Hierdurch wird dem Fahrer der Zeitpunkt signalisiert, zu dem er durch Pedalbetätigung ein Wiedereinkuppeln beginnen kann.

Der Erfindung liegt das Problem zugrunde, eine Gangwählvorrichtung für Doppelkupplungsgetriebe so zu gestalten, dass einem Fahrer das Gefühl gegeben wird, dass er direkt durch das Betätigen des Schalthebels den Gang wechseln könne ohne dass er dabei auf die Vorteile des Doppelkupplungsgetriebes verzichten müsste.

Das Problem wird durch die Merkmale des Anspruches 1 gelöst.

Die Wählvorrichtung zur manuellen Beeinflussung einer Fahrstufe eines automatisierten Getriebes weist einen Wählhebel auf, dessen Bewegung einem das automatisierte Getriebe beeinflussenden Steuergerät signalisiert wird. Ein Fahrer, der eine andere Gangstufe einzustellen beabsichtigt, muss dafür den Wählhebel zumeist vor- bzw. rückwärts verschieben bzw. bewegen. Diese Bewegung des Wählhebels wird registriert, beispielsweise mit Hilfe eines Potentiometers. Auch andere Sensoren und Bewegungsmelder sind denkbar und dem Fachmann bekannt.

Diese registrierte Bewegung wird dem Steuergerät signalisiert, welches auf das automatisierte Getriebe zugreift und einen entsprechenden Gangwechsel vorbereitet. Bevor der Gangwechsel erfolgen kann ist es notwendig, u. A. einen Zielgang zu synchronisieren. Dieser Zeitverzug steht dem Gefühl des Fahrers, er könne unmittelbar einen Gangwechsel bewirken, entgegen.

Zur Überbrückung dieses Zeitverzuges wird eine Bewegungsdauer des Wählhebels in Abhängigkeit von Fahrzeugparametern, insbesondere von Getriebeparametern, gesteuert. Dafür weist die Wählvorrichtung eine Gangwechselsteuereinrichtung auf, die mit dem Steuergerät derart zusammenarbeitend ausgebildet und angeordnet ist, dass eine Bewegungsdauer des Wählhebels eine Abhängigkeit von Fahrzeugparametern aufweist. Als Fahrzeugparameter sind insbesondere Getriebeparameter vorgesehen.

Unter Bewegungsdauer wird vorliegend diejenige Zeitspanne verstanden, die der Fahrer benötigt, um den Wählhebel von einer Neutralstellung oder Mittelstellung bis zu einem Endanschlag einer zugeordneten Gasse zu bewegen.

Erst wenn die Fahrzeugparameter den gewünschten Schaltvorgang erlauben, wird unmittelbar vorher die Bewegungsdauer beendet und der Gangwechsel ausgeführt. Es ist damit sichergestellt, daß der Gangwechsel unmittelbar nach der Beendigung der Bewegungsdauer erfolgt. Der Fahrer bekommt somit das Gefühl vermittelt, er könne den Gangwechsel durch den Schaltvorgang direkt bewirken.

Es versteht sich, daß das Steuergerät und die Gangwechselsteuereinrichtung nicht als zwei separate Bauteile ausgebildet sein müssen, sondern auch in einem einzigen Bauteil integriert sein können.

Die Gangwechselsteuereinrichtung weist eine Schaltkraftbeaufschlagung auf wobei eine Schaltkraft während der Bewegung des Wählhebels zur Steuerung der Bewegungsdauer vorgesehen ist. Die Steuerung der Bewegungsdauer erfolgt somit mittels der Schaltkraftbeaufschlagung durch eine Variation der erforderlichen Schaltkraft. Eine Erhöhung der Schaltkraft bewirkt eine verlängerte Bewegungsdauer und umgekehrt. Die Schaltkraft, die der Wählhebel dem Fahrer beim Schalten entgegensetzt, wird über geeignete Hilfsmittel, wie Federn, auf Schaltprofil laufende Kugeln, Sperren etc. moduliert, wie es dem Fachmann bekannt ist.

Als Fahrzeugparameter ist ein erfolgtes bzw. nicht erfolgtes Synchronisieren eines Zielganges vorgesehen. Ist eine Synchronisation des Zielganges noch nicht erfolgt, wird die Bewegungsdauer bis zur erfolgten Synchronisation verlängert.

In einem Bereich der Bewegung des Wählhebels ist eine Schaltkraftüberhöhung vorgesehen. Der Fahrer spürt in dieser Position bzw. in diesem Bereich im Wählhebel einen leichten Widerstand, wie er es u. U. von einem Schalthebel eines handgeschalteten Getriebes gewohnt ist. Dadurch entsteht eine Verlängerung der Schalt- bzw. Bewegungsdauer.

Der Schaltkraftüberhöhung ist ein zuschaltbarer Anschlag zugeordnet. Ist die Synchronisation des Zielganges bisher noch nicht erfolgt, wird über den zuschaltbaren Anschlag das weitere Betätigen des Hebels unterbunden. Während der Fahrer die Schaltkraft weiter erhöht, kann das Steuergerät den Zielgang synchronisieren. Ist das Einlegen des Zielganges erfolgt, wird der Anschlag aufgehoben. Der Fahrer spürt dies wie bei einem Handschaltgetriebe, welches die Sperrung im Augenblick der Synchronisation freigibt. Während der Fahrer den Wählhebel bis zu dem Endanschlag drückt, wird auf den Zielgang umgeschaltet, was nun in sehr kurzer Zeit erfolgen kann.

Der Anschlag kann auch als eine starke Überhöhung der Schaltkraft ausgebildet sein, welches beispielsweise durch Federelemente realisierbar ist.

Dem Bereich kann ein erster und zweiter Bereich vorgelagert und ein vierter Bereich nachgelagert sein. Dabei kann die Schaltkraft in dem ersten, sich an einer Mittelstellung des Wählhebels anschließenden, Bereich einen im wesentlichen wegproportionalen Verlauf mit einem relativ großen Gradienten aufweisen. Der Gradient in dem zweiten Bereich kann gegenüber demjenigen im ersten Bereich verringert sein. Im vierten Bereich kann der Gradient im wesentlichen mit demjenigen des zweiten Bereiches übereinstimmen. Mit Hilfe der verschiedenen Gradienten der Schaltkraft über den Schaltweg erhält der Fahrer das Gefühl einer unmittelbaren Verbindung des Wählhebels mit dem Getriebe.

Die Steuerung eines Wählhebels einer Wählvorrichtung zur manuellen Beeinflussung einer Fahrstufe eines automatisierten Getriebes, insbesondere für Kraftfahrzeuge, kennzeichnet sich dadurch, daß eine Bewegungsdauer des Wählhebels in Abhängigkeit von Fahrzeugparametern erfolgt. Als Fahrzeugparameter können insbesondere Getriebeparameter Verwendung finden.

Es ist eine Schaltkraft während der Bewegung des Wählhebels zur Steuerung der Bewegungsdauer vorgesehen. An einem Wegpunkt der Bewegung des Wählhebels ist die Schaltkraft überhöht. Die Größe der Überhöhung wird in Abhängigkeit einer erfolgten bzw. nicht erfolgten Synchronisation eines Zielganges gesteuert. Bei nicht erfolgter Synchronisation bis zu einer erfolgten Synchronisation des Zielganges ist die Überhöhung als Anschlag ausgelegt. Bei einem Rücklauf des Wählhebels in die Ausgangsposition kann die Schaltkraft in Richtung der Ausgangsposition und überhöhungsfrei erfolgen.

Die Erfindung wird anhand eines Ausführungsbeispiels weiter erläutert.

Es zeigen, jeweils in schematisierter Darstellung,
- Figur 1: ein Blockdiagramm einer Wählvorrichtung und
- Figur 2: einen Verlauf einer Schaltkraft über einen Schaltweg.

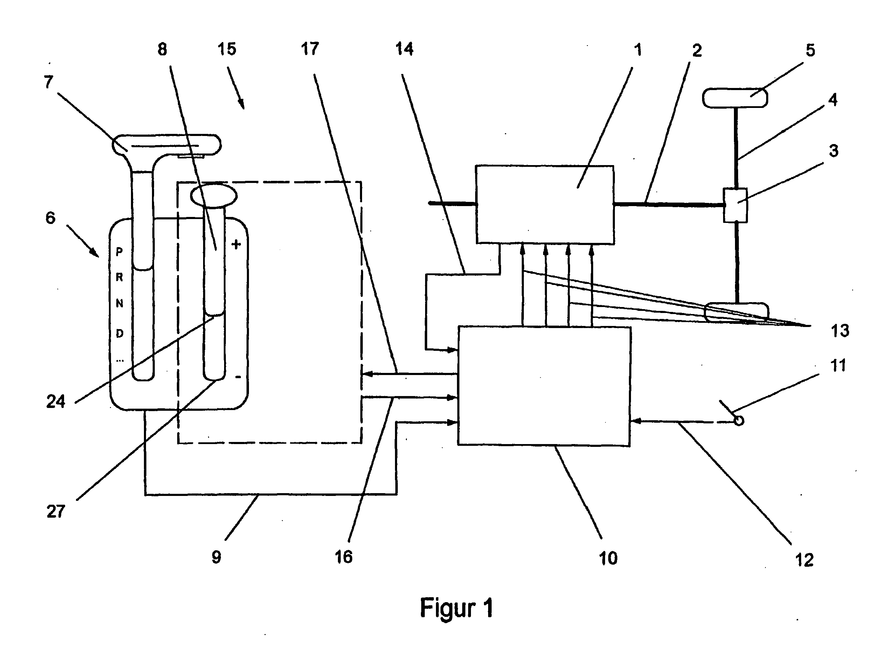

In der Figur 1 ist ein Getriebe 1 angedeutet, welches über eine Welle 2 und ein Differential 3 eine Drehbewegung auf eine Achse 4 und Räder 5 überträgt. Eine Wählvorrichtung 6 mit einem Automatikwählhebel 7 und einem Wählhebel 8 ist mittels einer Verbindung 9 mit einem Steuergerät 10 gekoppelt, welches dem Getriebe 1 vorgeschaltet ist. Dem Steuergerät 10 werden die verschiedensten Parameter zugeführt, wie beispielsweise eine Betätigung eines Kick - down - Schalters 11 (Leitung 12). Das Steuergerät 10 steht über mehrere Steuerleitungen 13 mit dem Getriebe 1 in Verbindung. Weiterhin ist eine Rückführung 14 von dem Getriebe 1 zu dem Steuergerät 10 vorgesehen. Dem Steuergerät 10 vorgeschaltet ist eine Gangwechselsteuereinrichtung 15, die zu dem Steuergerät 10 zumindest eine Zuleitung 16 und eine Rückleitung 17 aufweist. Es versteht sich, daß das Steuergerät 10 und die Gangwechselsteuereinrichtung 15 auch als ein einheitliches Bauteil ausgeführt werden können.

Mittels des Automatikwählhebels 7 kann ein Fahrer verschiedene Schaltstellungen auswählen, wie es im Stand der Technik bekannt ist. Diese Auswahl wird über die Verbindung 9 dem Steuergerät 10 zugeleitet, welches dann, ggf. in Abhängigkeit weiterer Parameter, das Getriebe 1 ansteuert.

Mittels des Wählhebels 8 hat der Fahrer die Möglichkeit, durch eine entsprechende Bewegung des Wählhebels 8 in Richtung "+" bzw. "-", einen von dem Steuergerät 10 vorgegebenen Gang selbständig sequentiell zu wechseln. Eine Bewegung des Wählhebels 8 wird durch entsprechende Sensoren der Gangwechselsteuereinrichtung 15 und / oder des Steuergerätes 10 registriert. Eine feste mechanische Verbindung zwischen dem Wählhebel 8 und dem Getriebe 1 besteht nicht. Um dem Fahrer dennoch das Gefühl zu geben, er könne direkt durch das Betätigen des Wählhebels 8 den Gang wechseln, ist die Gangwechselsteuereinrichtung 15 vorgesehen, die mit dem Steuergerät 10 derart zusammenarbeitend angeordnet und ausgebildet ist, daß eine Bewegungsdauer des Wählhebels 8 in Abhängigkeit von Fahrzeugparametern erfolgt. Als Fahrzeugparameter ist hier eine erfolgte Synchronisation eines Zielganges vorgesehen.

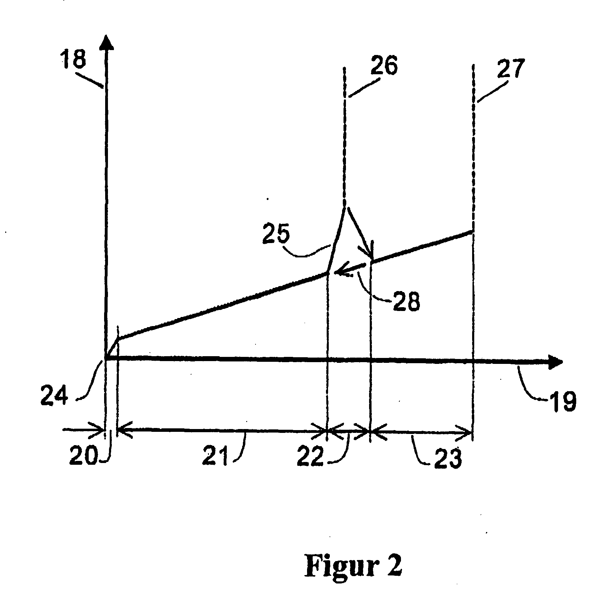

Die Bewegungsdauer wird dadurch gesteuert, daß die Gangwechselsteuereinrichtung 15 mittels dem Fachmann bekannter, hier nicht weiter dargestellter Elemente, wie beispielsweise Federn, eine Schaltkraft 18 (Fig. 2) in Abhängigkeit von den Fahrzeugparametern steuert.

In der Figur 2 ist die Schaltkraft 18 über einem Schaltweg 19 dargestellt. Der Schaltweg 19 ist in vier Bereiche 20 bis 23 eingeteilt. Der erste Bereich 20 beginnt in einer Mittelstellung 24 des Wählhebels 8. Die Schaltkraft 18 in diesem ersten Bereich 20 ist wegproportional und weist einen relativ großen Gradienten auf. Dadurch ist sichergestellt, daß Fahrzeugvibrationen, unbeabsichtigtes Berühren des Wählhebels 8 etc. nicht zu einem unbeabsichtigten Gangwechsel führen. Dem ersten Bereich 20 ist nur ein relativ kurzer Schaltweg 19 zugeordnet. Im Bereich des Überganges zwischen dem ersten Bereich 20 und dem zweiten Bereich 21 ist ein hier nicht dargestellter Sensor angeordnet, der eine entsprechende Wählhebelbewegung registriert. Die Steigung der Schaltkraft 18 über den Schaltweg 19 ist im Vergleich zu derjenigen im ersten Bereich 20 geringer ausgeführt. In dem dritten Bereich 22 ist eine Schaltkraftüberhöhung 25 mit einem großen Gradienten und ein zuschaltbarer Anschlag 26 vorgesehen. Der Anschlag 26 kann mechanisch oder aber auch durch starke Federkräfte etc. hervorgerufen werden. Noch im dritten Bereich 22 wird die Schaltkraftüberhöhung 25 zurückgeführt. Im vierten Bereich 23 erfolgt dann wieder eine wegproportionale Schaltkraft 18 mit im wesentlichen gleichem Gradienten wie im zweiten Bereich 21. Der vierte Bereich 23 wird abgeschlossen durch einen Endanschlag 27.

Im folgenden wird die Funktion an einem Doppelkupplungsgetriebe weiter erläutert.

Der Fahrer betätigt den Wählhebel 8. Sobald der Wählhebel 8 aus der Mittelstellung 24 heraus bewegt wurde, registriert das Steuergerät 10 und die Gangwechselsteuereinrichtung 15 den Wunsch des Fahrers nach einem Gangwechsel. Dies ist im Bereich des Überganges zwischen dem ersten und zweiten Bereich 20, 21 gegeben. Noch während der Wählhebel 8 betätigt wird, kann das Steuergerät 10 den Zielgang synchronisieren und ggf. den Gang einlegen (zweiter Bereich 21). In dem dritten Bereich 22 spürt der Fahrer aufgrund der Schaltkraftüberhöhung 25 in dem Wählhebel 8 einen leichten Widerstand, wie er es u. U. von einem Handschalter gewohnt ist. Ist eine Synchronisation des Zielganges bis zu diesem Zeitpunkt noch nicht erfolgt, kann über den zuschaltbaren Anschlag 26 das weitere Betätigen des Wählhebels 8 unterbunden werden. Während der Fahrer die Schaltkraft 18 weiter erhöht, hat das Steuergerät 10 Zeit zum Synchronisieren. Ist das Einlegen des Zielganges erfolgt, wird der zuschaltbare Anschlag 26 aufgehoben. Der Fahrer spürt dies wie bei einem Handschaltgetriebe, welches die Sperrung im Augenblick des Synchronisierens freigibt. Während der Fahrer den Wählhebel 8 bis zu dem Endanschlag 27 drückt, wird mittels Kupplungsmanagement auf den Zielgang umgeschaltet, was nun in sehr kurzer Zeit erfolgen kann. Beim Rücklauf des Wählhebels 8 in die Mittelstellung 24 entfällt die Schaltkraftüberhöhung 27, wie es durch einen Pfeil 28 angedeutet ist.

## Patentansprüche

1. Wählvorrichtung (6) zur manuellen Beeinflussung einer Fahrstufe eines automatisierten Doppelkupplungsgetriebes (1), insbesondere für Kraftfahrzeuge,
mit einem Wählhebel (8), den der Fahrer zum Wechseln in einen zielgang von einer Neutralstellung oder Mittelstellung (24) bis zu einem Endanschlag (27) einer zugeordneten Gasse innerhalb einer von Fahrzeugparametern, nämlich einem erfolgten bzw. nicht erfolgten Synchronisieren des Zielgangs, abhängigen Zeitspanne bewegt, wobei
- die Bewegung des Wählhebels (8) einem das automatisierte Doppelkupplungsgetriebe (1) beeinflussenden Steuergerät (10) signalisiert wird,
- das Steuergerät (10) und eine Gangwechselsteuereinrichtung (15) derart zusammenarbeitend ausgebildet und angeordnet sind,
· dass in einem Bereich (22) der Bewegung des Wählhebels (8) eine vom Fahrer als leichter widerstand spürbare Schaltkraftüberhöhung (25) vorgesehen ist, der ein zuschaltbarer Anschlag (26) zugeordnet ist,
· dass, wenn eine Synchronisierung des Zielgangs noch nicht erfolgt ist, über den zuschaltbaren Anschlag (26) ein weiteres Betätigen des Wählhebels (8) unterbunden wird,
· dass der zuschaltbare Anschlag (26) aufgehoben wird, sobald ein Einlegen des zielgangs erfolgt ist, und
· dass, während der Fahrer den wählhebel (8) in einem dem Bereich (22) der Schaltkraftüberhöhung nachgelagerten Bereich (23) bis zu dem Endanschlag (27) drückt, mittels Kupplungsmanagement auf den Zielgang umgeschaltet wird.

2. Wählvorrichtung nach Anspruch 1,
**dadurch gekennzeichnet,**
**dass** dem Bereich (22) ein erster und zweier Bereich (20; 21) vorgelagert und ein vierter Bereich (23) nachgelagert ist, dass eine Schaltkraft (18) in dem ersten, sich an eine Mittelstellung (24) des Wählhebels (8) anschließenden, Bereich (20) einen im Wesentlichen wegproportionalen Verlauf mit einem relativ großen Gradienten aufweist, dass der Gradient im zweiten Bereich (21) gegenüber desjenigen im ersten Bereich (20) verringert ist, und dass der Gradient im vierten Bereich (23) im wesentlichen mit demjenigen im zweiten Bereich (21) übereinstimmt.

3. Wählvorrichtung nach einem der vorangehenden Ansprüche,
**dadurch gekennzeichnet,**
**dass** bei einem Rücklauf des Wählhebels (8) in die Mittelstellung (24) die Schaltkraftüberhöhung (27) entfällt.

## Claims

1. Selector device (6) for manually influencing a drive position of an automated double-clutch transmission (1), in particular for motor vehicles,
having a selector lever (8) which the driver moves in order to change into a target gear speed from a neutral position or central position (24) as far as an end stop (27) of an assigned gate within a time period which is dependent on vehicle parameters, specifically synchronization of the target gear speed which has taken place or has not taken place, wherein
- the movement of the selector lever (8) is signalled to a control device (10) which influences the automated double-clutch transmission (1),
- the control device (10) and a gear speed-controlling device (15) are embodied and arranged such as to cooperate in such a way
• that, in a region (22) of the movement of the selector lever (8), a raised portion (25) of the shifting force, which can be sensed as a slight resistance by the driver, is provided, a stop (26) which can be connected into the circuit being assigned to said raised portion (25) of the shifting force,
• that, if synchronization of the target gear speed has not yet taken place, further actuation of the selector lever (8) is prevented by means of the stop (26) which an be connected into the circuit,
• that the stop (26) which can be connected into the circuit is deactivated as soon as the target gear speed has been engaged, and
• that, while the driver is pressing the selector lever (8) in a region (23), positioned after the region (22) of the raised portion of the shifting force, as far as the end stop (27), shifting into the target gear speed is performed by means of clutch management.

2. Selector device according to Claim 1,
**characterized**
**in that** a first region and a second region (20; 21) are positioned in front of the region (22), and a fourth region (23) is positioned after it, in that, in the first region (20) adjoining a central position (24) of the selector lever (8), a shifting force (18) has an essentially travel-proportional profile with a relatively large gradient, in that the gradient in the second region (21) is reduced in comparison with that in the first region (20), and in that the gradient in the fourth region (23) corresponds essentially to that in the second region (21).

3. Selector device according to one of the preceding claims,
**characterized**
**in that**, when the selector lever (8) returns to the central position (24), the raised portion (27) of the shifting force fails to occur.

## Revendications

1. Dispositif de sélection (6) pour influencer manuellement un rapport d'une boîte de vitesses automatisée à double accouplement (1), notamment pour véhicules automobiles, comprenant un levier de sélection (8) que le conducteur déplace, pour passer un rapport voulu depuis une position neutre ou une position médiane (24), jusqu'à une butée d'extrémité (27) d'un trajet associé pendant un intervalle de temps qui dépend des paramètres du véhicule, à savoir une synchronisation effectuée ou non effectuée du rapport voulu,
- le mouvement du levier de sélection (8) étant signalé à un module de commande (10) qui influence la boîte de vitesses automatisée à double accouplement (1),
- le module de commande (10) et un dispositif de commande de changement de rapport (15) étant configurés pour interagir et disposés de telle sorte
* que dans une zone (22) de mouvement du levier de sélection (8), il est prévu un surhaussement de la force de changement de rapport (25) pouvant être perçu par le conducteur comme une légère résistance, laquelle est associée à une butée (26) pouvant être mise en circuit,
* que lorsqu'une synchronisation du rapport voulu n'a pas encore eu lieu, une poursuite de l'actionnement du levier de sélection (8) est inhibée par le biais de la butée (26) pouvant être mise en circuit,
* que la butée (26) pouvant être mise en circuit est supprimée dès qu'un engagement du rapport voulu a eu lieu et
* que pendant que le conducteur pousse le levier de sélection (8) dans une zone (23), qui est située auprès la zone (22) de surhaussement de la force de changement de rapport, jusqu'à la butée d'extrémité (27), le passage du rapport voulu s'effectue au moyen de la gestion d'accouplement.

2. Dispositif de sélection selon la revendication 1, **caractérisé en ce que** la zone (22) est précédée par une première et une deuxième zone (20, 21) et suivie par une quatrième zone (23), qu'une force de changement de rapport (18) dans la première zone (20), qui est rattachée à une position médiane (24) du levier de sélection (8), présente un tracé pour l'essentiel proportionnel à la course avec un gradient relativement important, que le gradient dans la deuxième zone (21) est réduit par rapport à celui dans la première zone (20), et que le gradient dans la quatrième zone (23) coïncide pour l'essentiel avec celui dans la deuxième zone (21).

3. Dispositif de sélection selon l'une des revendications précédentes, **caractérisé en ce que** le surhaussement de la force de changement de rapport (27) est annulé lors d'un retour du levier de sélection (8) dans la position médiane (24).
